# EUROPEAN PATENT SPECIFICATION

(11) **EP 1 502 832 B1**
(45) Date of publication and mention of the grant of the patent: **24.03.2010**
(21) Application number: 04254427.0
(22) Date of filing: 23.07.2004
(51) Int. Cl.: B60S 13/02

(54) **Vehicle turntable**
Fahrzeugdrehscheibe
Plaque tournante pour véhicule

(30) Priority: 26.07.2003 GB 0317589
(43) Date of publication of application: 02.02.2005
(73) Proprietor: Jeffs, Michael John, Haverhill, Suffolk CB9 9DF (GB)
(72) Inventor: Jeffs, Michael John, Haverhill, Suffolk CB9 9DF (GB)
(74) Representative: Atkinson, Jennifer

(56) References cited:
- WO-A-98/30424
- US-A- 1 562 853
- US-A- 3 024 738
- US-A- 4 753 173
- US-A1- 2003 101 894

## Description

This invention relates to a turntable, and in particular to a turntable for rotating a vehicle located on the turntable.

With the ever increasing number of vehicles and decreasing space for parking and manoeuvring vehicles there is a demand for systems that make it easier to park and to safely manoeuvre vehicles. Indeed, with the increasing number of cars for domestic use, with a household now having two or three cars, many households are now converting what was a front garden into a parking space or a driveway. However, this can create its own further problems of access on and off the highway. The parking spaces are often small and leave little room for manoeuvre requiring the driver to reverse off the highway into the parking space or even worse, to reverse onto a busy highway. This can be dangerous to the driver and to other drivers and pedestrians.

Problems can also arise when trying to manoeuvre small helicopters which must be facing into the wind before take off. Small helicopters are not fitted with any wheels so must be manually turned around with the aid of a trolley.

Present systems, which could be used to assist in the above-described situations, are costly to manufacture and install, typically comprising welded steel turntables that are mounted in situ into a housing member.

US 1, 562, 853 describes a portable automobile turntable for garages in a rectangular frame.

According to a first aspect, the invention provides a vehicle turntable system for rotating a vehicle when located on the turntable, comprising a housing member, with at least one centralising and supporting assembly, and a turntable member, configured as a circular disk which is located in the housing, **characterised in that** the housing member and the turntable member are made from pre-cast concrete or polymer resin, wherein the system is supplied as a pre-calibrated and pre-assembled combined unit with the turntable member mounted in the housing member ready for installation and use at a desired location. The housing member may be circular or rectangular.

Preferably, the vehicle turntable system of the present invention is configured for installation in a driveway or in the ground at a site of use. Preferably, the surface of the turntable member is arranged to be installed substantially flush with the surrounding ground/surface level.

The term pre-calibrated means that the system has been calibrated at the point of manufacture or distribution to be ready for use and no further substantial calibration is required at the point of use/installation.

The term pre-assembled means that the circular disk or turntable member has been located in the circular housing member at the point of manufacture or distribution, and is delivered to the consumer ready for installation at the point of use.

As the vehicle turntable system of the present invention is pre-calibrated and pre-assembled at the point of manufacture or distribution, all that has to be done when the system is delivered to the site of installation is to secure the system to a surface, say by setting it in an appropriate hole in the ground, setting it in concrete or tarmac in a driveway or by fixing it by appropriate means to a surface at the point of use. The system is then ready for use. If necessary services may be connected to the system, these may include means to provide power to drive the turntable, such as pipes to a hydraulic drive motor or electricity to an electric drive motor. This is in contrast to known welded vehicle turntable systems in which the housing is first positioned on a surface, the supporting and centralising assemblies are then recalibrated before the turntable is finally lowered into position in the housing. The supporting and centralising assemblies may then have to be re-calibrated again. Not until all these steps have been completed is the system ready for use.

Preferably the housing member and the turntable member are made from moulded pre-cast concrete modules. This material allows the housing member and the turntable member to be accurately moulded and reduces the need for any substantial re-calibration of the system after the vehicle turntable leaves the point of manufacture. Other known vehicle turntable systems are made from welded steel which becomes distorted after welding and therefore have to be reshaped and calibrated prior to leaving the workshop, which adds additional time and cost to the manufacture process. Steel welded structures also have to be levelled and calibrated again when on site, again adding further cost. By way of contrast, a vehicle turntable according to the present invention, fabricated from concrete, may be delivered to a site of installation and installed without any secondary calibration. The vehicle turntable is therefore simple to install and does not necessarily require expert installation.

Manufacture of the housing member and turntable member from pre-cast concrete modules is also more cost effective than making a welded structure, as the materials and the manufacturing process are cheaper.

Preferably the vehicle turntable is configured to accommodate a car, van, bus, lorry, motorcycle, helicopter, or any other vehicle. Different sized turntables may be configured to accommodate different vehicles, for example, a turntable member with a diameter of some 2 metres may be configured to locate and rotate a car, whereas a lorry or bus would require a turntable member of a larger diameter say some 4 to 5 metres or more.

Preferably the vehicle turntable is configured to rotate a vehicle located thereon anything between 1 and 360 degrees. For example, if the system is located on a driveway and the vehicle to be rotated is a car the turntable system may be arranged to rotate the vehicle about 180 degrees, essentially so that the vehicle faces the opposite direction to when located on the turntable. Whereas if the vehicle turntable system is for a helicopter, which must be moved to face into the wind the turntable system may be arranged to rotate the helicopter between 1 and 360 degrees depending on the wind direction.

Preferably the centralising and supporting assembly comprises a first roller assembly arranged to centre the turntable member in the housing member and a second roller assembly arranged to support the turntable member. Both the first and the second roller assemblies aid in the rotation of the turntable member located in the housing member. When the housing member is manufactured as a cast article the position of the rollers may be accurately fixed. By using pre-manufactured assembly jigs a manufacturer can mass produce the housings accurately and at a competitive cost.

The centralising and/or the supporting assembly may be recessed into the housing. By recessing the centralising and/or support assemblies the depth of the housing member can be kept to a minimum. By placing the supporting assembly in a recess in a base of the housing member the overall depth of the system can be kept to a minimum, this may be important if the installer wishes to avoid electrical and service conduits which may already pass under a driveway or site of installation. Preferably, these conduits run further beneath the drive or surface than the depth that need be excavated in order to install a vehicle turntable system of the present invention.

Rotation of the turntable member may be effected manually or automatically. Automatic rotation may be by means of a hydraulic motor or an electric motor. Rotation of the turntable member may be belt driven or friction driven. The mechanism of rotation may be geared. The gears may be cast into the housing member. The use of gears will reduce any slip of the turntable member on rotation. For safety reason a torque limiter may be included in the gear system.

The housing member or, more preferably, the turntable member may be configured to have a lip around the edge, which is raised slightly or dropped slightly, from the level of the turntable member. The lip may be only a few millimetres, or may be a few centimetres, provided that it is sufficient for a driver to notice the lip as they drive over it but not to damage the vehicle. The lip may be provided to alert the driver of a vehicle that he is on or off the turntable member.

The surface of the turntable member may be substantially planar. The surface may be substantially smooth or may be slightly uneven. The surface of the turntable member may be paved, for example, to blend in with the surrounding surface or with the driveway material.

The vehicle turntable system may include a drainage facility for rainwater. Service ducts to drain away rainwater may be cast into the housing member and turntable member as they are manufactured.

In the case where the turntable system includes a drainage facility, preferably the surface of the turntable member may be non-planar, being shaped to drain surface water towards the drainage ducts.

Other service ducts may also be included in the system. The service ducts may allow electricity cables to pass into the system, for example, to provide power to drive rotation of the turntable member, or to power lighting of the system. Alternatively, the service ducts may allow hydraulic pipes carrying hydraulic fluid to connect to a hydraulic motor. Service ducts may also be included to allow the addition of grease to the system.

The service ducts may also allow services, such as electricity cables or water pipes not connected to the system to pass through the system, if necessary.

The vehicle turntable system may include lighting. The lighting may be for decorative purposes, or may be to guide a vehicle into position on the turntable member, for example, to guide a landing helicopter.

The vehicle turntable system may include the components necessary to include some sort of water feature, for example, a fountain in the system.

The vehicle turntable system may include lifting points. The lifting points being may be arranged to allow the system to be lifted onto a lorry for transport, to be lifted into position and to be lifted out of position necessary. Preferably the lifting points are concealed when the system is installed.

Preferably, the vehicle turntable system is configured to allow it to be transported positioned on its side, that is, vertically. To aid vertical transportation the vehicle turntable system may include lifting points arranged to allow vertical lift and storage of the vehicle turntable system.

The vehicle turntable system may include means to access the housing member and to the inside of the vehicle turntable system, to allow maintenance of the system and any other services which pass through or under the vehicle turntable system.

The vehicle turntable system may include a heating system in the housing. The heating system may prevent the vehicle turntable system from freezing up in cold weather.

The housing member may be substantially annular with cylindrical inner and outer surfaces. This minimises the amount of concrete required and keeps the weight of the system to a minimum. However, provided that the inner surface of the housing member is cylindrical to allow smooth rotation of the turntable within, the outer surface may have any shape. Thus the housing may comprise a rectangular slab having a cylindrical hole within to accommodate the turntable member. This outer cross section makes the system easier to locate in position since in practice it may be easier to form a rectangular hole in the ground for receiving the housing.

The present invention will now be illustrated, merely by way of example, with reference to the following figures.
**Figure 1A** shows a perspective view of a vehicle turntable system;
**Figure 1B** shows a perspective view of the vehicle turntable system of Figure 1A with the housing member and the turntable member separate;
**Figure 2** shows a perspective view of the housing member of Figure 1B in more detail;
**Figure 3** shows a perspective view of the supporting and centralising assembly of the housing member of Figure 2;

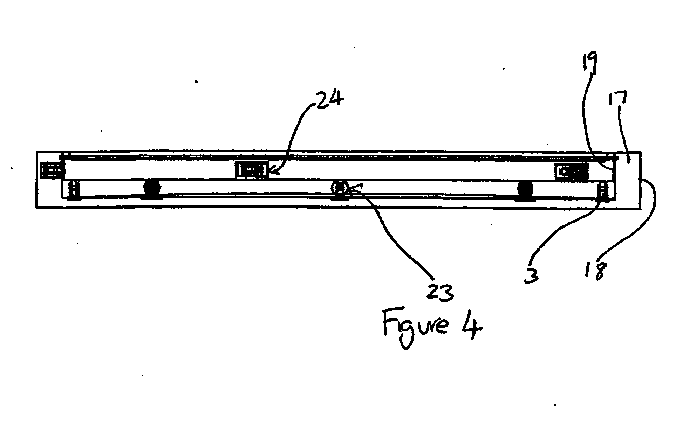

**Figure 4** shows a cross sectional perspective view of the housing member of Figure 1B;
**Figure 5** shows a cross sectional view of the housing member and turntable member of Figure 1A;
**Figure 6A** shows in plan an alternative shape for the housing member;
**Figure 6B** shows a perspective view of the alternatively shaped housing depicted in Figure 6A; and
**Figure 7A** shows a perspective view of an alternative support assembly to that of Figure 3.
**Figure 7B** shows a cross sectional view of the support assembly along line A-A' of Figure 7A
**Figure 8** shows a side view of a lorry loaded with a turntable system according to Figures 1A and 1B.

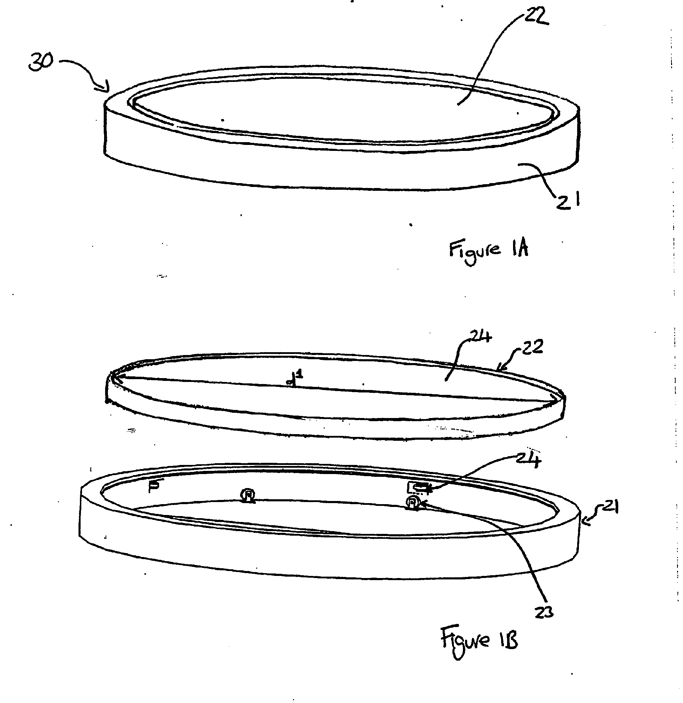

Referring to Figures 1A and 1B a vehicle turntable system 30 for rotating a vehicle (not shown) when located on the system, comprises a housing member 21, configured as a circular housing 21 with at least one centralising and supporting assembly 23, 24, and a turntable member 22, configured as a circular disk which is located in the circular housing 21. The system 30 is supplied as a pre-calibrated and pre-assembled combined unit with the turntable member 22 mounted in the housing member 21 ready for installation and use at a desired location.

The turntable member or turntable 22 is a circular disk with a substantially planar upper surface 24 and a substantially planar lower surface (not shown). The diameter of the disk/turntable (d¹) is slightly less than the inner diameter (d²) of the housing member or housing 21 so that the turntable 22 can be dropped into the housing 21 and can be arranged to rotate within the housing 21. The turntable 22 does not carry any of the operating mechanism necessary to rotate the turntable, this is all part of the housing 21.

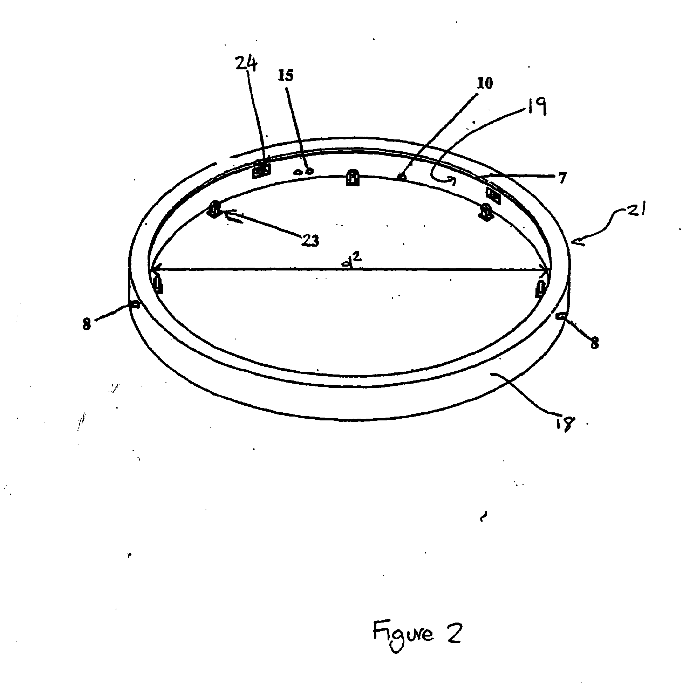

Figure 2 depicts the housing 21 in more detail. The housing 21 is configured as circular ring structure 17 with an inner diameter (d²) which is slightly larger than the diameter (d¹) of the turntable 22, thereby allowing the turntable 22 to be located therein. The housing 21 also includes a circular base 2 on which the circular ring structure 17 is seated.

The housing 21 is typically cast upside down allowing the fixing plates 14 for the load bearing support wheels 4 to be attached to a pre-datumned and calibrated fixing point already cast into the mould. This reduces the need for secondary re-calibration.

The base 2 of the housing 21 may be slightly domed or inclined to aid in drainage.

The ring structure 17 of the housing 21 may be of any suitable cross section. In this embodiment the ring structure 17 has a rectangular cross section.

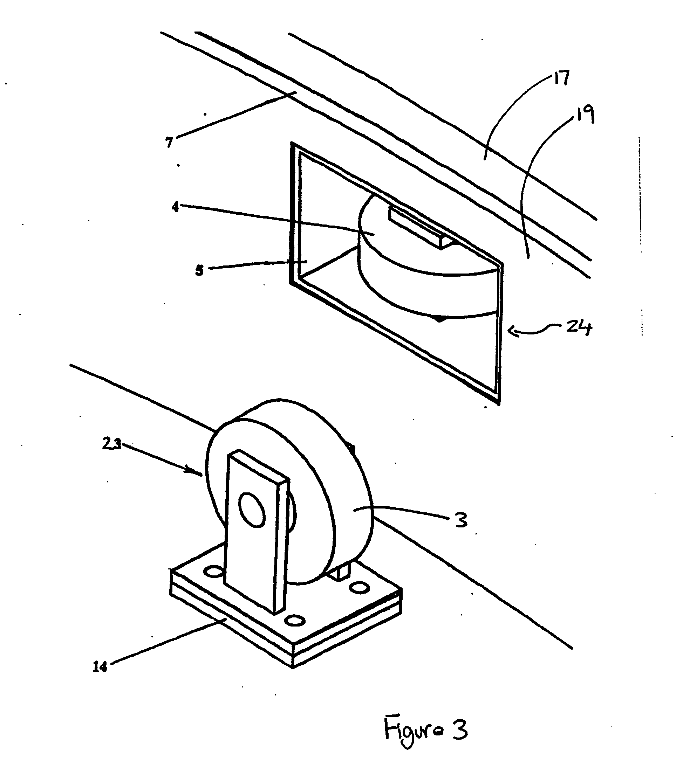

The housing 21 also includes the supporting and centralizing assemblies 23, 24 (Figure 3). In addition the housing also includes an insert for trace heating 7.

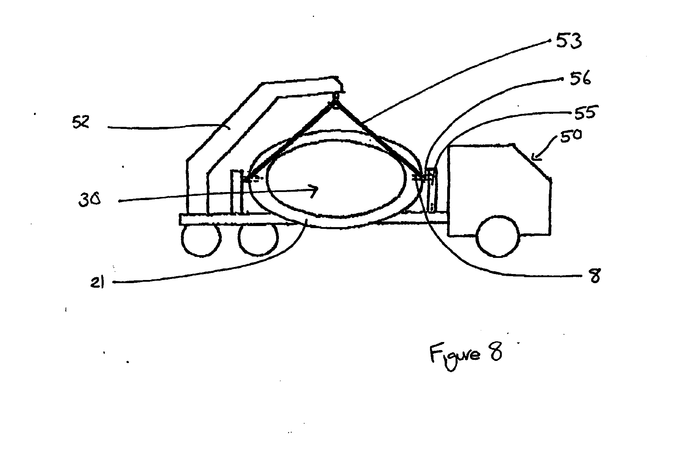

Lifting points 8 are configured as recesses in the outer surface 18 of the housing 21 ring structure 17. The lifting points 8 can be used to lift the turntable system 30 between positions, for example onto a lorry for transportation or into position on a driveway for use. The lifting points 8 may be located on transit brackets 56 on a lorry 50 to allow safe vertical transportation of the vehicle turntable system 30 (Figure 8).

Drain 10 is configured as a channel which passes though the housing 21 and allows water to drain from the turntable system 30.

Channels 15 are configured as service ducts to allow services to be transmitted into the turntable system 30 from outside. For example, the channels 15 may carry pipes to a hydraulic motor, or electricity cables to an electric motor, to drive the turntable system 30, in addition the channels 15 may water if the turntable system 30 includes a water feature.

The support and centralising assembly 23, 24 is depicted in Figure 3. Typically, a housing 21 will include at least four supporting and centralising assemblies 23, 24. The centralising assembly comprises a centralising roller 4 located in a recess 5 on the inside surface 19 of the ring structure 17 of the housing 21. The supporting assembly comprises a supporting roller 3 mounted on a fixing plate 14 attached to the base 2 of the housing 21. In use the supporting wheel 3 takes the weight of the turntable 22 and the centralising wheel 4 locates the turntable 22 at the centre of the housing 21. The centralising wheel(s) 4 prevents the turntable 22 from contacting the inner surface 19 of the housing 21.

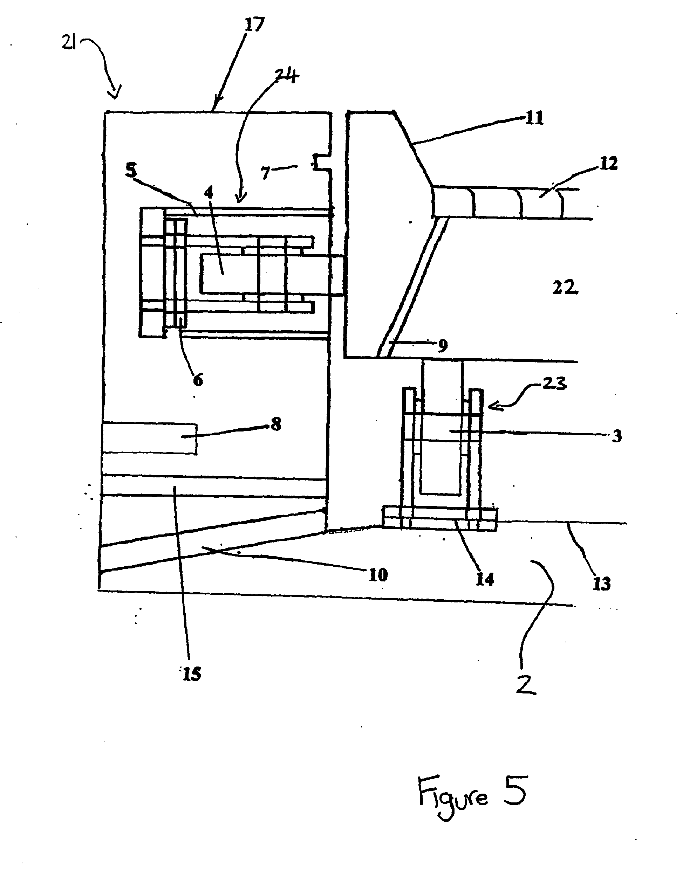

Referring to Figure 5 a turntable 22 is depicted located in a position for use in a housing 21. The turntable 22 is shown supported on a supporting wheel 3 and centralised by a centralising wheel 4 (other supporting and centralising wheels are not shown). A rubber buffer 6 prevents damage to the centralising wheel 4 or the housing 21 if the turntable 22 is pushed into the centralising wheel 4 forcing the centralising wheel 4 back into the housing 5. Drain 9 in the turntable 22 allows water to drain from the surface of the turntable 22 into the housing 21 where drain 10 takes the water out of the turntable system 30. The turntable 22 surface is shown to be block paved 12. A lip 11 at the outer edge of the turntable 22 allows a user to tell when driving onto the turntable 22 that they have reached the edge of the turntable 22.

The drive unit (not shown), for example a hydraulic motor, is located in the wall of the ring structure 17 of the housing 21.

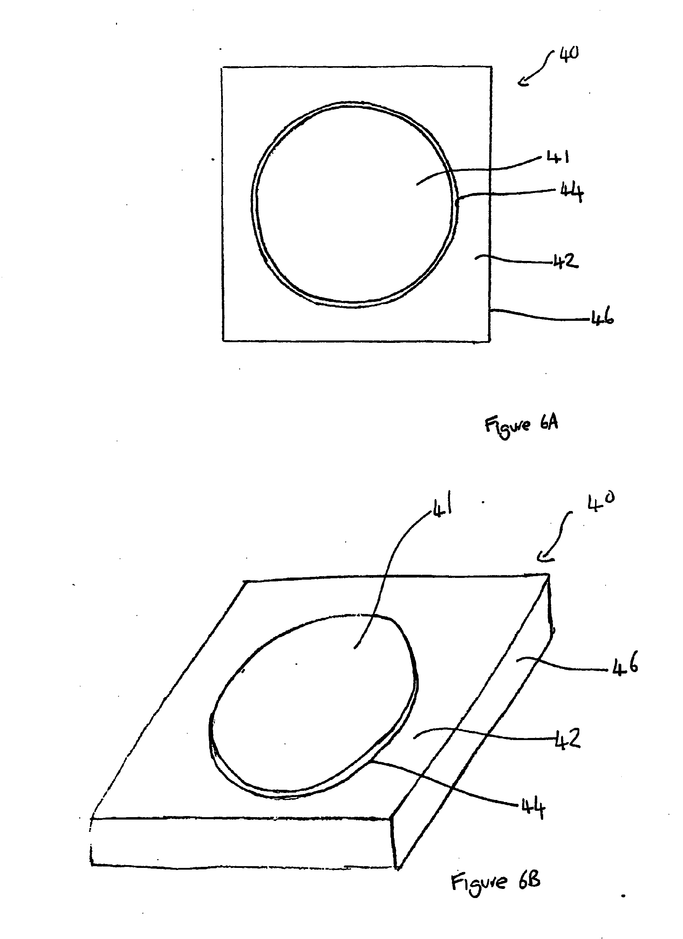

Referring to Figures 6A and 6B, in an alternative embodiment the vehicle turntable system 40 comprises a rectangular housing 41 and a circular turntable 42. The turntable 42 is located in a circular hole in the housing 41, the circular hole is defined by the inner circular edge 44 of the housing 41.

The housing 42 is configured with a rectangular outer edge 46, for location in a rectangular hole at the point of use, this may be in a driveway, in a basement, at a vehicle lift or any other suitable location.

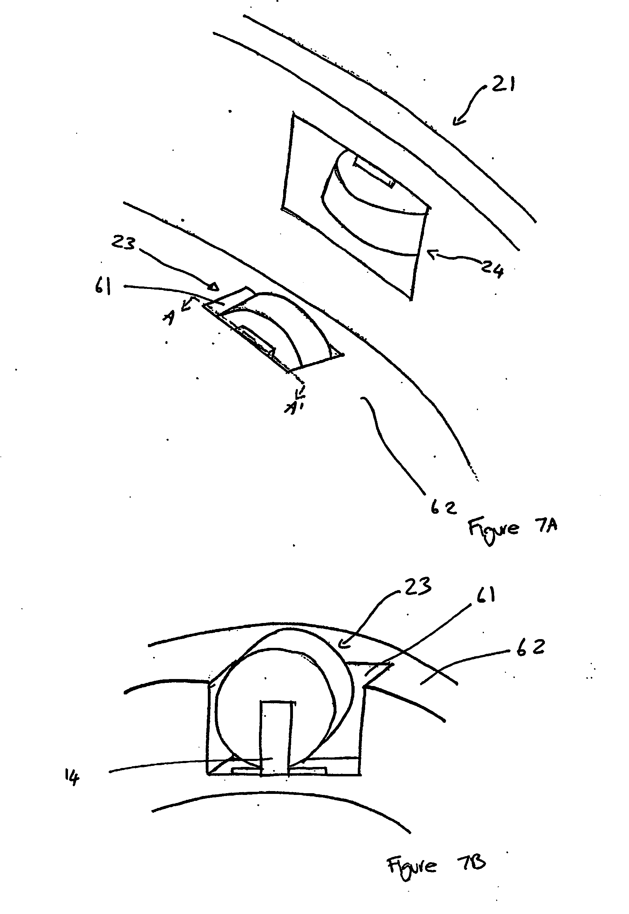

Figures 7A and 7B depict an alternative housing to that depicted in Figures 1B, 2 and 3. In this arrangement the support assembly 23, like the centralising assembly 24, is recessed into the housing 21. More specifically, the support assembly 23 is located in the base 62 of the housing 21. The supporting roller 3 projects slightly above the surface of the base 62 of the housing 61 so it can contact and support the turntable member 22 when positioned in the housing 21. The fixing plate 14, which holds the supporting roller 3, is located in the recess 61.

If necessary, or desired, the upper edge of the recess 61 may be reinforced (not shown), for example with metal plating.

Referring to Figure 8, a lorry 50, comprising a hoisting crane 52 with lifting ropes 53 and support posts 55, is depicted with a vehicle turntable system 30 located vertically thereon. Transit brackets 56 are located in lifting points 8 in the housing 21 of the turntable system 30 and serve two purposes. Firstly, the transit brackets 56 allow the lifting ropes 53 to be attached to the turntable system 30 thereby allowing the system 30 to be lifted, using the crane 52, on and off the lorry 50. Secondly, when the vehicle turntable system 30 is on the lorry 50, the transit brackets 56 can be located in, or secured to, the support posts 55 to safely position the vehicle turntable system 30 in a vertical position on the lorry 50.

## Claims

1. A vehicle turntable system for rotating a vehicle when located on the turntable, comprising a housing member (21,42), with at least one centralising and supporting assembly (23,24), and a turntable member (22,41), configured as a circular disk which is located in the housing member (21,42), wherein the system is supplied as a pre-calibrated and pre-assembled combined unit with the turntable member (22,41) mounted in the housing member (21,42) ready for installation and use at a desired location,
**characterised in that** the housing member (21,42) and the turntable member (22,41) are made from pre-cast concrete or polymer resin.

2. A vehicle turntable system according to claim 1 wherein the housing member is circular (21) or rectangular (42) and has a cyndrical hole to accommodate the circular turntable member (22,41).

3. A vehicle turntable system according to claim 1 or claim 2, configured for installation in a driveway or in the ground at a site of use.

4. A vehicle turntable system according to any one of the preceding claims, wherein the surface of the turntable member (22,41) is arranged to be installed substantially flush with the surrounding ground/surface level.

5. A vehicle turntable system according to any one of the preceding claims, configured to accommodate a car, van, bus, lorry, motorcycle, helicopter, or any other vehicle.

6. A vehicle turntable system according to any one of the preceding claims, configured to rotate a vehicle located thereon between 1 and 360 degrees.

7. A vehicle turntable system according to any one of the preceding claims, wherein the centralising and supporting assembly (23,24) comprises a first roller assembly (4) arranged to centre the turntable member (22,41) in the housing member (21,42) and a second roller assembly (3) to support the turntable member (22).

8. A vehicle turntable system according to claim 7, wherein the centralising and/or supporting assembly (23,24) is recessed into the housing (21,42).

9. A vehicle turntable system according to any one of the preceding claims, wherein rotation of the turntable member (22,41) is effected manually or automatically.

10. A vehicle turntable system according to claim 9, wherein automatic rotation of the turntable member (22,41) is by means of a hydraulic motor or an electric motor.

11. A vehicle turntable system according to any one of the preceding claims, wherein rotation of the turntable member (22,41) is belt driven or friction driven.

12. A vehicle turntable system according to any one of the preceding claims, wherein a mechanism of rotation of the turntable member (22,41) is geared and the gears may be cast into the housing member (21,42).

13. A vehicle turntable system according to any one of the preceding claims, wherein the housing member (21,42), or more preferably, the turntable member (22,41) is configured to have a lip around the edge, which is raised slightly or dropped slightly, from the level of the turntable member (22,41).

14. A vehicle turntable system according to any one of the preceding claims, including a drainage facility (10) for rainwater.

15. A vehicle turntable system according to any one of the preceding claims, wherein service ducts (15) are provided to allow electricity to pass into the system, hydraulic pipes carrying hydraulic fluid to connect to a hydraulic motor and/or to allow services to pass through the system.

16. A vehicle turntable system according to any one of the preceding claims, wherein the system includes lighting, components necessary to include a water feature and/or a heating system.

17. A vehicle turntable system according to any one of the preceding claims, wherein the system includes lifting points (8).

18. A vehicle turntable system according to any one of the preceding claims, wherein the system includes means to access the housing member (21,42) and the inside of the vehicle turntable system.

## Patentansprüche

1. Fahrzeugdrehscheibensystem zum Drehen eines Fahrzeugs, wenn dieses auf der Drehscheibe angeordnet ist, umfassend: ein Gehäuseelement (21, 42) mit zumindest einer Zentralisier- und Traganordnung (23, 24) und ein Drehscheibenelement (22, 41), konfiguriert als eine kreisförmige Scheibe, die in dem Gehäuseelement (21, 42) angeordnet ist, wobei das System als eine vorkalibrierte und vormontierte kombinierte Einheit bereitgestellt wird, bei der das Drehscheibenelement (22, 41) in dem Gehäuseelement (21, 42) montiert ist, bereit zur Installation und zum Einsatz an einem gewünschten Ort,
**dadurch gekennzeichnet, dass** das Gehäuseelement (21, 42) und das Drehscheibenelement (22, 41) aus Fertigbeton oder Polymerharz gefertigt sind.

2. Fahrzeugdrehscheibensystem nach Anspruch 1, wobei das Gehäuseelement kreisförmig (21) oder rechteckig (42) ist und eine zylindrische Öffnung zur Aufnahme des kreisförmigen Drehscheibenelements (22, 41) aufweist.

3. Fahrzeugdrehscheibensystem nach Anspruch 1 oder Anspruch 2, konfiguriert zur Installation in einer Einfahrt oder im Erdreich an einem Einsatzort.

4. Fahrzeugdrehscheibensystem nach einem der vorangehenden Ansprüche, wobei die Oberfläche des Drehscheibenelements (22, 41) so angeordnet ist, dass sie im Wesentlichen bündig mit dem umliegenden Erdreich/der umliegenden Oberfläche abschließt.

5. Fahrzeugdrehscheibensystem nach einem der vorangehenden Ansprüche, konfiguriert zur Aufnahme eines Autos, Lieferwagens, Busses, LKW, Motorrads, Hubschraubers oder sonstigen Fahrzeugs.

6. Fahrzeugdrehscheibensystem nach einem der vorangehenden Ansprüche, konfiguriert zum Drehen eines darauf angeordneten Fahrzeugs um zwischen 1 und 360 Grad.

7. Fahrzeugdrehscheibensystem nach einem der vorangehenden Ansprüche, wobei die Zentralisier- und Traganordnung (23, 24) eine erste Rollenanordnung (4), angeordnet zum mittigen Ausrichten des Drehscheibenelements (22, 41) in dem Gehäuseelement (21, 42), und eine zweite Rollenanordnung (3) zum Tragen des Drehscheibenelements (22) umfasst.

8. Fahrzeugdrehscheibensystem nach Anspruch 7, wobei die Zentralisier- und/oder Traganordnung (23, 24) in das Gehäuse (21, 42) eingelassen ist.

9. Fahrzeugdrehscheibensystem nach einem der vorangehenden Ansprüche, wobei das Drehen des Drehscheibenelements (22, 41) manuell oder automatisch bewirkt wird.

10. Fahrzeugdrehscheibensystem nach Anspruch 9, wobei das automatische Drehen des Drehscheibenelements (22, 41) mittels eines Hydraulikmotors oder eines Elektromotors erfolgt.

11. Fahrzeugdrehscheibensystem nach einem der vorangehenden Ansprüche, wobei das Drehen des Drehscheibenelements (22, 41) durch Riemenantrieb oder Reibantrieb erfolgt.

12. Fahrzeugdrehscheibensystem nach einem der vorangehenden Ansprüche, wobei ein Drehmechanismus des Drehscheibenelements (22, 41) mit einem Getriebe versehen ist und die Getriebe in das Gehäuseelement (21, 42) gegossen sein können.

13. Fahrzeugdrehscheibensystem nach einem der vorangehenden Ansprüche, wobei das Gehäuseelement (21, 42) oder bevorzugter das Drehscheibenelement (22, 41), so konfiguriert ist, dass es um die Kante herum einen Rand aufweist, der gegenüber der Höhe des Drehscheibenelements (22, 41) leicht erhöht oder leicht abgesenkt ist.

14. Fahrzeugdrehscheibensystem nach einem der vorangehenden Ansprüche, einschließend eine Ablaufeinrichtung (10) für Regenwasser.

15. Fahrzeugdrehscheibensystem nach einem der vorangehenden Ansprüche, wobei Versorgungskanäle (15) vorgesehen sind, die ermöglichen, dass Elektrizität in das System hinein gelangen kann, Hydraulikrohre, die Hydraulikfluid befördern, an einen Hydraulikmotor angeschlossen werden können und/oder Versorgungsleitungen durch das System führen können.

16. Fahrzeugdrehscheibensystem nach einem der vorangehenden Ansprüche, wobei das System Beleuchtung, zum Bereitstellen eines Wassereinrichtung notwendige Bauteile und/oder ein Heizungssystem einschließt.

17. Fahrzeugdrehscheibensystem nach einem der vorangehenden Ansprüche, wobei das System Hebepunkte (8) einschließt.

18. Fahrzeugdrehscheibensystem nach einem der vorangehenden Ansprüche, wobei das System Mittel zum Zugang zu dem Gehäuseelement (21, 42) und dem Inneren des Fahrzeugdrehscheibensystems zu bekommen, einschließt.

## Revendications

1. Système de plaque tournante pour véhicule destiné à faire tourner un véhicule, lorsqu'il est positionné sur la plaque tournante, comprenant un élément de boîtier (21, 42) avec au moins une ensemble de centralisation et de support (23, 24) et un élément de plaque tournante (22, 41), configuré comme un disque circulaire qui est positionné dans l'élément de boîtier (21, 42) dans lequel le système est fourni comme une unité combinée pré-calibrée et pré-assemblée avec l'élément de plaque tournante (22, 41) montée dans l'élément de boîtier (21, 42) prête pour l'installation et l'utilisation à un emplacement souhaité,
**caractérisé en ce que** l'élément de boîtier (21, 42) et l'élément de plaque tournante (22, 41) sont réalisés à partir d'un béton manufacturé ou d'une résine polymère.

2. Système de plaque tournante pour véhicule selon la revendication 1, dans lequel l'élément de boîtier est circulaire (21) ou rectangulaire (42) et a un trou cylindrique pour loger l'élément de plaque tournante circulaire (22, 41).

3. Système de plaque tournante pour véhicule selon la revendication 1 ou la revendication 2, configuré pour l'installation dans une voie d'accès ou dans le sol sur un site d'utilisation.

4. Système de plaque tournante pour véhicule selon l'une quelconque des revendications précédentes, dans lequel la surface de l'élément de plaque tournante (22, 41) est agencée pour être installée sensiblement de niveau avec le niveau de surface / sol environnant.

5. Système de plaque tournante pour véhicule selon l'une quelconque des revendications précédentes, configuré pour accueillir une voiture, une camionnette, un bus, un camion, une motocyclette, un hélicoptère ou n'importe quel autre véhicule.

6. Système de plaque tournante pour véhicule selon l'une quelconque des revendications précédentes, configuré pour faire tourner un véhicule positionné sur celui-ci entre 1 et 360 degrés.

7. Système de plaque tournante pour véhicule selon l'une quelconque des revendications précédentes, dans lequel l'ensemble de centralisation et de support (23, 24) comprend un premier ensemble de rouleau (4) agencé pour centrer l'élément de plaque tournante (22, 41) dans l'élément de boîtier (21, 42) et un second ensemble de rouleau (3) pour supporter l'élément de plaque tournante (22).

8. Système de plaque tournante pour véhicule selon la revendication 7, dans lequel l'ensemble de centralisation et/ou de support (23, 24) est enfoncé dans le boîtier (21, 42).

9. Système de plaque tournante pour véhicule selon l'une quelconque des revendications précédentes, dans lequel la rotation de l'élément de plaque tournante (22, 41) est effectuée manuellement ou automatiquement.

10. Système de plaque tournante pour véhicule selon la revendication 9, dans lequel la rotation automatique de l'élément de plaque tournante (22, 41) se fait au moyen d'un moteur hydraulique ou d'un moteur électrique.

11. Système de plaque tournante pour véhicule selon l'une quelconque des revendications précédentes, dans lequel la rotation de l'élément de plaque tournante (22, 41) est entraînée par courroie ou est entraînée par friction.

12. Système de plaque tournante pour véhicule selon l'une quelconque des revendications précédentes, dans lequel un mécanisme de rotation de l'élément de plaque tournante (22, 41) est à engrenages et les engrenages peuvent être moulés dans l'élément de boîtier (21, 42).

13. Système de plaque tournante pour véhicule selon l'une quelconque des revendications précédentes, dans lequel l'élément de boîtier (21, 42) ou encore de préférence, l'élément de plaque tournante (22, 41) est configuré pour avoir une lèvre autour du bord qui est légèrement levée ou légèrement abaissée par rapport au niveau de l'élément de plaque tournante (22, 41).

14. Système de plaque tournante pour véhicule selon l'une quelconque des revendications précédentes, comprenant un équipement d'évacuation (10) pour l'eau de pluie.

15. Système de plaque tournante pour véhicule selon l'une quelconque des revendications précédentes, dans lequel on prévoit des conduits de service (15) pour permettre à l'électricité de passer dans le système, des tuyaux hydrauliques transportant le fluide hydraulique pour se raccorder à un moteur hydraulique et/ou pour permettre aux services de passer par le système.

16. Système de plaque tournante pour véhicule selon l'une quelconque des revendications précédentes, dans lequel le système comprend des composants d'éclairage nécessaires pour inclure une installation d'eau et/ou un système de chauffage.

17. Système de plaque tournante pour véhicule selon l'une quelconque des revendications précédentes, dans lequel le système comprend des points de levage (8).

18. Système de plaque tournante pour véhicule selon l'une quelconque des revendications précédentes, dans lequel le système comprend des moyens pour avoir accès à l'élément de boîtier (21, 42) et à l'intérieur du système de plaque tournante pour véhicule.
